# EUROPEAN PATENT APPLICATION

(11) **EP 4 152 164 A1**
(43) Date of publication of application: **22.03.2023**
(21) Application number: 21804844.5
(22) Date of filing: 14.05.2021
(51) Int. Cl.: G06F 13/00, H04N 21/239, H04N 21/2668, H04N 21/4728

(54) **VIDEO PLAYBACK DEVICE, AND VIDEO PLAYBACK METHOD**

(30) Priority: 15.05.2020 JP 2020086157
(71) Applicant: Run.Edge Limited, Tokyo 151-0051 (JP)
(72) Inventor: OGUCHI, Atsushi, Tokyo 151-0051 (JP); SAKAGUCHI, Manabu, Tokyo 151-0051 (JP); ITO, Tomohiro, Tokyo 151-0051 (JP)
(74) Representative: Angerhausen, Christoph
(86) International application number: PCT/JP2021/018440
(87) International publication number: WO 2021/230354

(57) **Abstract**

Provided is a video playback device that inflicts a small burden on a server, and is capable of restricting the volume of video data to be downloaded. A video playback device 2 where part of video data 322 that are divided into a plurality of divided files and stored in a server storage unit 32 are selected and then played back by a display unit 25, includes:
a scene selection unit 211 for a user to select a certain scene contained in the video data 322;
a scene selection accepting unit 212 for accepting selections of divided files to be downloaded from a server 3, in accordance with inputs by the scene selection unit 211;
a download instruction unit 213 for giving instructions to download the divided files that have been accepted by the scene selection accepting unit 212 and are to be downloaded;
a playback video generation unit 214 for generating playback video data 222 as part of the video data 322, from the divided files downloaded based on the instructions of the download instruction unit 213; and
a video playback device storage unit 22 for storing the playback video data 222 that are playable on the display unit 25.

## Description

### TECHNICAL FIELD

The present invention relates to a video playback device and video playback method where at least part of video data that are divided into a plurality of divided files and stored in a server storage unit are selected and then played back.

### BACKGROUND ART

Conventionally, in terms of distributing or playing back a video content via a network, streaming utilizing HLS (HTTP Live Streaming) is well known; for example, Patent document 1 discloses that MPEG-TS (Transport Stream) files are to be coupled together whereby the one video data after coupling will be transcoded to an MP4 file before being played back.

For example, Patent document 2 discloses that playback order information-containing video playback files received from a server are to be stored in the main storages of multiple mobile terminals, and ts files will then be read out in accordance with the playback order of the video playback files stored in the main storages as the video progresses, whereby URLs (Uniform Resource Locators) indicated by the ts (transport stream) files will be accessed so as to download (cache) video data.

For example, Patent document 3 discloses that a video playback application converts video data into that of HLS format by generating a plurality of divided files divided at a given period of time (e.g. a period of 10 sec), and playlist files used to give playback instructions of these divided files, based on the video data downloaded.

### PRIOR ART DOCUMENTS

### Patent documents

Patent document 1: JP-A-2019-22199
Patent document 2: JP-A-2019-75606
Patent document 3: JP-A-2017-55379

### SUMMARY OF THE INVENTION

### Problems to be solved by the invention

The problem with Patent document 1 is as follows. Conversion processing is required when coupling together a plurality of video data separated from a plurality of divided files, and thereby combining them into one video data before playing back the same. For this reason, a large burden will be inflicted on a server, and more time will be spent for as much as the time spent on performing conversion processing.

As for Patent document 2, the purpose thereof is to easily synchronize the playback of a video in each information processing terminal when multiple users simultaneously watch the video as the video is distributed to multiple information processing terminals; Patent document 2 does not introduce the idea of selectively downloading only the video data of a scene the user wants to watch.

Even in the case of the information device and distribution device disclosed in Patent document 3, their purpose is to make video data that have already been downloaded available when the downloading of the video data has been disrupted; these devices do not introduce the idea of selectively downloading only the video data of a scene the user wants to watch. Further, the problem with Patent document 3 is that since it is necessary to analyze the timestamps of the video data downloaded, and then generate divided files by dividing the original video data for every given period of time based on the timestamps analyzed, a large burden will be imposed on the information device playing back the video.

The present invention was made in view of these circumstances, and is to provide a video playback device and video playback method capable of selectively downloading only the video data of a scene the user wants to watch, imposing a small burden on the server, and restricting the volume of the video data to be downloaded.

### Means to solve the problems

In order to solve these problems, the present invention provides a video playback device where part of video data that are divided into a plurality of divided files and stored in a server storage unit are selected and then played back on a display unit, the video playback device including:
a scene selection unit for a user to select a certain scene contained in the video data;
a scene selection accepting unit for accepting selections of divided files to be downloaded from a server, in accordance with inputs by the scene selection unit;
a download instruction unit for giving instructions to download the divided files that have been accepted by the scene selection accepting unit and are to be downloaded;
a playback video generation unit for generating playback video data as part of the video data, from the divided files downloaded based on the instructions of the download instruction unit; and
a video playback device storage unit for storing the playback video data that are playable on the display unit.

The video playback device may be configured in such a manner where
the scene selection accepting unit accepts the selections of the divided files to be downloaded, by means of a first playlist listing, in a playback order, divided files corresponding to the certain scene; and
the playback video generation unit generates the playback video data by means of a second playlist listing, in a playback order, divided files to be played back.

The video playback device may be configured in such a manner where when the divided files that have been accepted by the scene selection accepting unit and are to be downloaded are identical to divided files contained in the playback video data that have already been generated and stored in the video playback device storage unit, the playback video data stored in the video playback device storage unit are played back on the display unit without downloading from the server the divided files to be downloaded.

Further, the present invention provides a video playback method where part of video data that are divided into a plurality of divided files and stored in a server storage unit are selected and then played back on a display unit, the video playback method including:
an input step for accepting inputs from a user via a scene selection unit that is provided for the user to select a certain scene contained in the video data;
a scene selection accepting step for accepting selections of divided files to be downloaded from a server, in accordance with the inputs by the scene selection unit;
a download instruction step for giving instructions to download the divided files that have been accepted by the scene selection accepting step and are to be downloaded;
a playback video generation step for generating playback video data as part of the video data, from the divided files downloaded based on the instructions of the download instruction step; and
a video playback device storing step for storing the playback video data that are playable on the display unit in a video playback device storage unit.

The video playback method may be configured in such a manner where
the scene selection accepting step accepts the selections of the divided files to be downloaded, by means of a first playlist listing, in a playback order, divided files corresponding to the certain scene; and
the playback video generation step generates the playback video data by means of a second playlist listing, in a playback order, divided files to be played back.

The video playback method may be configured in such a manner where when the divided files that have been accepted by the scene selection accepting step and are to be downloaded are identical to divided files contained in the playback video data that have already been generated and stored in the video playback device storage unit, the display unit plays back the playback video data stored in the video playback device storage unit without downloading from the server the divided files to be downloaded.

### Effects of the invention

With the video playback device and video playback method of the present invention, a scene the user wants to watch can be selectively played back while restricting the burden on the server and the volume of the video data to be downloaded. Further, a video can be played back even in an off-line state where the video playback device is not connected to a network environment.

### BRIEF DESCRIPTION OF THE DRAWINGS

FIG. 1 is a block diagram showing a preferable embodiment of an overall configuration of a video playback system including a video playback device of the present invention.
FIG.2 is a schematic diagram showing an example of a display screen displayed by the execution of, for example, an application and/or software in the video playback device of the present invention.
FIG.3 is a schematic diagram showing a configuration of video data stored in a server storage unit of a server of the present embodiment.
FIG.4 is a schematic diagram showing an example(s) of a playlist listing divided files to be downloaded, the playlist being stored in a video playback device storage unit of the video playback device of the present invention.
FIG. 5 is a schematic diagram showing a configuration of playback video data generated by a playback video generation unit of the video playback device of the present invention.
FIG.6 is a flowchart showing a preferable embodiment of a process flow in a video playback method of the present invention.
FIG.7 is a flowchart showing a preferable embodiment other than that shown in the flowchart of FIG.6.

### MODE FOR CARRYING OUT THE INVENTION

A preferable embodiment of the video playback device and video playback method of the present invention is described hereunder with reference to the drawings.

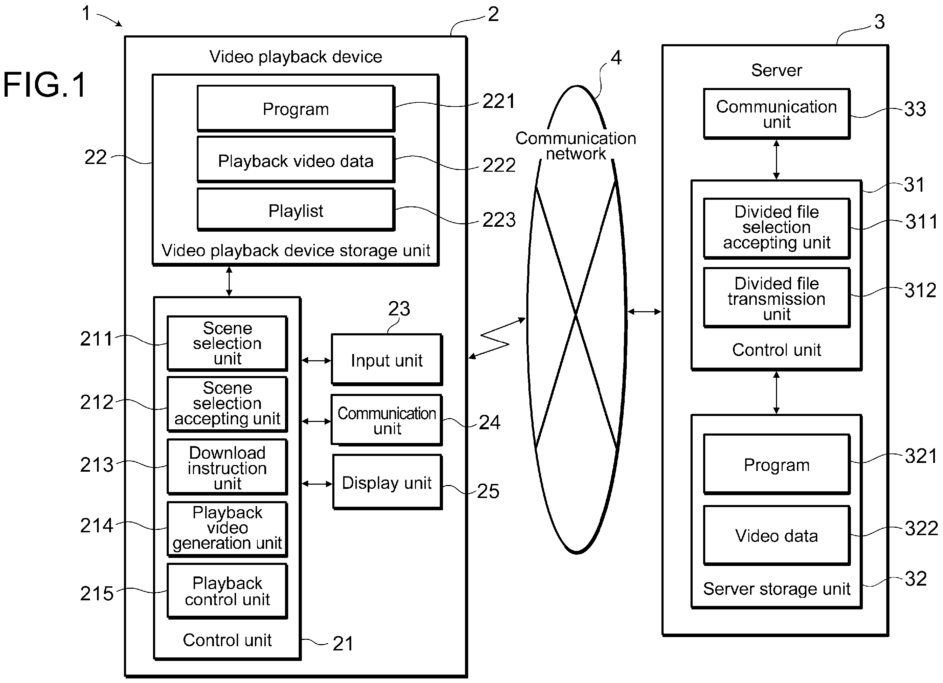

FIG. 1 is a block diagram showing an overall configuration of a video playback system 1 including a video playback device 2 of the present embodiment.

As a configuration for realizing the video playback system 1 of the present embodiment, the configuration includes the video playback device 2, a server 3 and a communication network 4. In this diagram, while there is one video playback device 2, there may be employed a plurality of video playback devices 2.

In this embodiment, the video playback device 2 includes, as its main component elements, a control unit 21, a video playback device storage unit 22, an input unit 23, a communication unit 24 and a display unit 25. The control unit 21 includes various units for selecting and playing back part of video data 322 that are divided into a plurality of divided files and stored in a server storage unit 32, specifically by a later-described method. Here, the display unit 25 may be provided outside the video playback device 2.

The video playback device storage unit 22 contains a program 221 stored therein by for example installation. Further, the video playback device storage unit 22 stores playback video data 222 obtained by downloading part of the video data 322 that are stored in the server storage unit 32. The video playback device storage unit 22 also stores a playlist 223. The playlist 223 may contain a first playlist that is for a scene selection accepting unit 212 to accept selections of divided files to be downloaded, and lists, in a playback order, divided files corresponding to a certain scene of the video data 322; and a second playlist that is for a playback video generation unit 214 to generate the playback video data 222, and lists, in a playback order, divided files to be played back. The first play list and the second play list may designate an identical divided file(s).

The control unit 21 includes the scene selection accepting unit 212, a download instruction unit 213, the playback video generation unit 214 and a playback control unit 215. The control unit 21 reads the program 221 from the video playback device storage unit 22, and the program 221 makes the control unit 21 as a computer execute the scene selection accepting unit 212, the download instruction unit 213, the playback video generation unit 214 and the playback control unit 215.

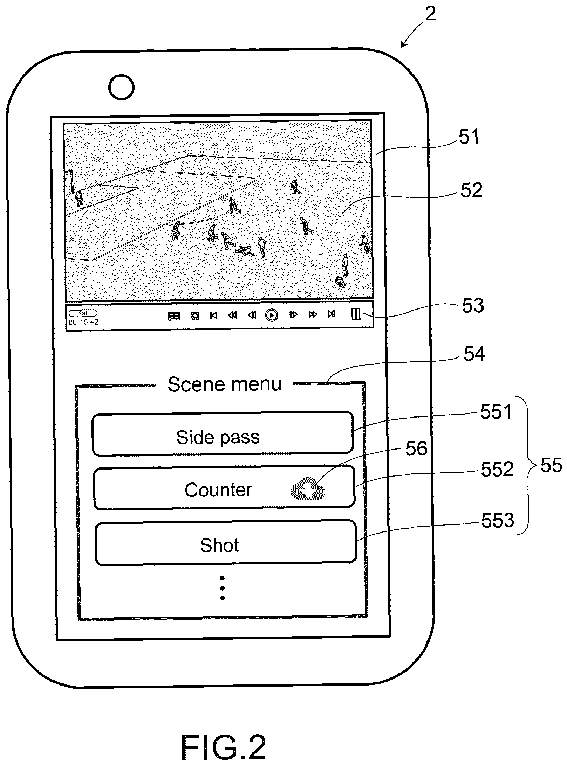

The input unit 23 is for accepting inputs from a user via a scene selection button(s) 55 (see FIG.2) serving as a tool as a scene selection unit 211; for example, the input unit 23 will transmit to the control unit 21 the fact that the scene selection button 55 has been pushed by the user. The input unit 23 for example includes the scene selection button 55 displayed on a touch panel screen; once the user has carried out an operation of, for example, tapping the touch panel screen, the control unit 21 will read the program 221 so that the input unit 23 will give an input instruction for making the control unit 21 execute the function corresponding to such operation. For example, as shown in FIG.2, among the multiple scene selection buttons 55 displayed on the display screen, when the user has pushed a button 552 marked "Counter," the fact that this button 552 has been pushed will be transmitted to the control unit 21 by the input unit 23, and the control unit 21 will then, under the command of the program 221, make the scene selection accepting unit 212 recognize that this button 552 has been selected.

The control unit 21 enables communication with the server 3 via the communication network 4, by controlling the communication unit 24.

By controlling the display unit 25, the control unit 21 displays, for example, an application screen and/or software screen generated by the program 221 on a display screen 51 of the display unit 25 (see FIG.2). Due to the instructions of the program 221, there will be displayed on the display screen 51 a video playing back the playback video data 222 and the scene selection buttons 55 for the user to select certain scenes contained in the video data 322. The display unit 25 and the input unit 23 compose the touch panel screen, and the input unit 23 made of a transparent electrode is arranged on the display screen 51 of the display unit 25. The touch panel screen is configured in such a manner that once a touching operation has been carried out with regard to the input unit 23 on, for example, the button(s) 55 displayed on the display unit 25, an operation signal corresponding thereto will be sent from the input unit 23 to the control unit 21.

The scene selection accepting unit 212 contained in the control unit 21 accepts the selections of the divided files to be downloaded from the server 3, in accordance with the inputs by the multiple scene selection buttons 55. The scene selection accepting unit 212 may be configured in such a manner that it accepts the selections of the divided files to be downloaded, by means of the first playlist listing, in a playback order, divided files corresponding to a certain scene of the video data 322.

The download instruction unit 213 contained in the control unit 21 gives instructions to download the divided files that have been accepted by the scene selection accepting unit 212 and are to be downloaded.

The playback video generation unit 214 contained in the control unit 21 generates the playback video data 222 from the divided files that have been downloaded based on the instructions of the download instruction unit 213. The playback video generation unit 214 may be configured in such a manner that it generates the playback video data 222 by means of the second playlist listing, in a playback order, divided files to be played back.

The playback control unit 215 contained in the control unit 21 has a function where when the divided files that have been accepted by the scene selection accepting unit 212 and are to be downloaded are identical to divided files contained in the playback video data 222 that have already been generated and stored in the video playback device storage unit 22, the playback control unit 215 will allow the display unit 25 to play back the playback video data 222 stored in the video playback device storage unit 22 without downloading from the server 3 the divided files to be downloaded.

The video playback device 2 includes the communication unit 24, and is a device capable of activating an application and/or software by the execution of the program 221; for example, there may be employed a mobile information terminal device such as a smartphone, a tablet terminal and a mobile computer, or a personal computer such as a desktop computer.

In this embodiment, the server 3 includes, as its main component elements, a control unit 31, the server storage unit 32 and a communication unit 33. The control unit 31 includes a divided file selection accepting unit 311 and a divided file transmission unit 312. The control unit 31 enables communication with the video playback device 2 via the communication network 4, by controlling the communication unit 33. In this embodiment, the communication unit 33 is mainly used for the purpose of, for example, receiving download instructions sent from the video playback device 2, and sending to the video playback device 2 the divided files of the video data 322 of which the download instructions have been accepted.

The divided file selection accepting unit 311 of the control unit 31 accepts instructions to download certain divided files, from the download instruction unit 213 of the video playback device 2. The divided file transmission unit 312 of the control unit 31 makes it possible for the instructed divided files to be downloaded to be sent from the server storage unit 32 to the video playback device 2 via the communication unit 33.

The server storage unit 32 of the server 3 contains a program 321 stored therein by for example installation. The hardware configuration of the server 3 is a so-called general configuration where the control unit 31 as a computer has a processor such as a central processing unit (CPU), and executes the program 321 stored in the server storage unit 32 as a storage device (memory) such as a ROM (Read Only Memory) and a hard disk. The program 321 makes the control unit 31 as a computer execute the divided file selection accepting unit 311 and the divided file transmission unit 312.

The communication network 4 is a communication infrastructure such as the internet.

FIG.2 to FIG.5 are now used as references to describe a configuration from the acceptance of the playback of a certain scene(s) of the video data 322 stored in the server storage unit 32 of the server 3 to the actual playback thereof.

FIG.2 is a schematic diagram showing one example of the display screen 51 displayed by the execution of, for example, the aforementioned application and/or software, in the case of the video playback device 2. Displayed on the display screen 51 are a playback screen 52 showing a video of for example a soccer match as the playback video data 222; an operation button group 53 for performing operations such as playback, pause, fast-forward, fast-rewind, playing back the next scene, playing back the previous scene, and changing the playback speed, with respect to the video playback; and a scene menu 54 containing the scene selection buttons 55 for the user to select each scene associated with a certain scene of the video data 322.

In FIG.2, as an example(s) of the scene selection buttons 55, there are shown three buttons which are a side pass button 551, a counter button 552 and a shot button 553. Once the user has pushed the side pass button 551, part of the video data 322 in the server 3 that have been previously associated with a scene of a side pass will be downloaded so that this scene will be played back and displayed on the playback screen 52. Once the user has pushed the counter button 552, part of the video data 322 in the server 3 that have been previously associated with a scene of a counter will be downloaded so that this scene will be played back and displayed on the playback screen 52. Once the user has pushed the shot button 553, part of the video data 322 in the server 3 that have been previously associated with a scene of a shot will be downloaded so that this scene will be played back and displayed on the playback screen 52.

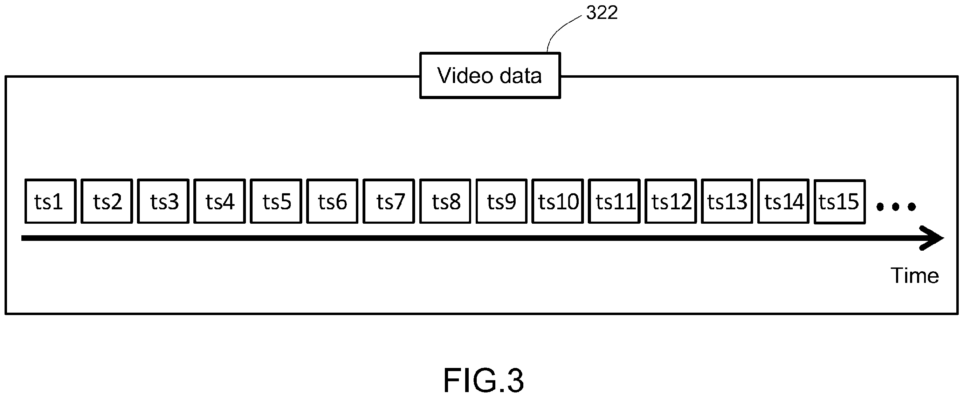

FIG.3 is a schematic diagram showing the configuration of the video data 322 stored in the server storage unit 32 of the server 3. The video data 322 are divided into a plurality of divided files (also referred to as ts files), and are data of an HLS format video capable of being played back by designating the divided files to be played back. In this diagram, for the sake of simplicity, there are shown part of the video data 322; 15 divided files of ts1 to ts15 are shown. The video data 322 are for example divided into divided files each having a length of 2 seconds i.e. the segment length of each divided file may be 2 seconds.

The aforementioned various scenes and the video data 322 are associated with one another in a way such that, for example, the scene of the side pass corresponds to the divided files of ts1 to ts6 (from 0th second to 12th second), the scene of the counter corresponds to the divided files of ts7 to ts11 (from 12th second to 22nd second), and the scene of the shot corresponds to the divided files of ts12 to ts15 (from 22nd second to 30th second).

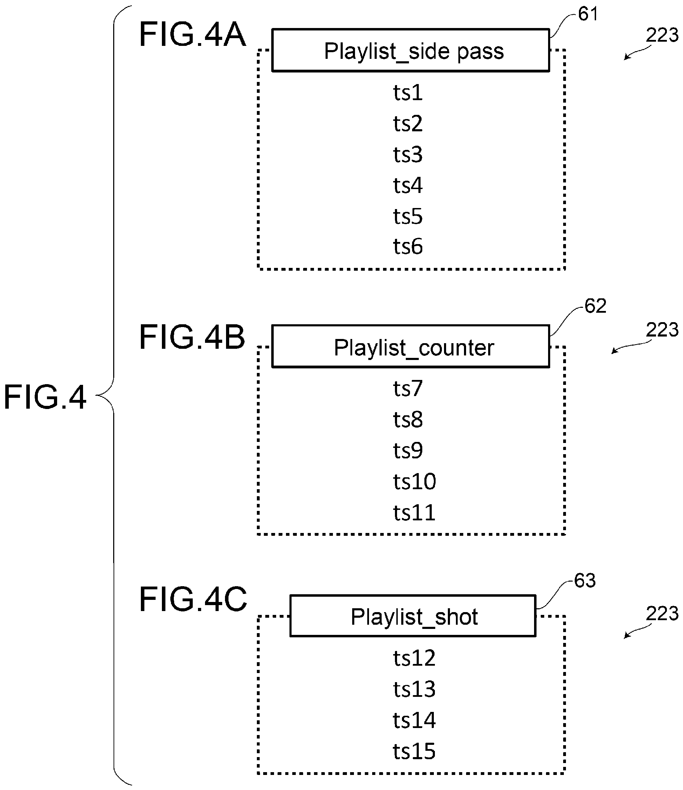

As a method for realizing such association, there can be used the playlist 223 listing in a playback order the corresponding divided files. FIG.4 shows examples of the playlist 223. As the divided files corresponding to the scene of the side pass, listed in a playlist_side pass 61 are information of the divided files of ts1 to ts6. As the divided files corresponding to the scene of the counter, listed in a playlist_counter 62 are information of the divided files of ts7 to ts11. As the divided files corresponding to the scene of the shot, listed in a playlist shot 63 are information of the divided files of ts12 to ts15. As the information of each divided file, there can be listed, for example, the file name of each divided file, and the URL where each divided file is stored. Each playlist 223 can be stored in the video playback device storage unit 22 of the video playback device 2.

Upon receiving from the input unit 23 the transmission indicating that the user has pushed any of the scene selection buttons 55, the scene selection accepting unit 212 of the video playback device 2 will read out the playlist 223 which is stored in the video playback device storage unit 22 and corresponds to the scene selection button 55 that has been pushed, and will thus accept the selections of the divided files to be downloaded. The download instruction unit 213 will then read the content of the playlist 223, and control the communication unit 24 so as to send to the server 3 instructions to download from the server 3 the divided files that are listed in the playlist 223. The divided file selection accepting unit 311 of the server 3 will accept the selections of the divided files of which the download instructions have been given. As mentioned above, the selections of the divided files can be designated via, for example, the URLs where the divided files are stored. The divided file transmission unit 312 of the server 3 controls the communication unit 33 so as to send to the video playback device 2 the divided files corresponding to, for example, the designated URLs.

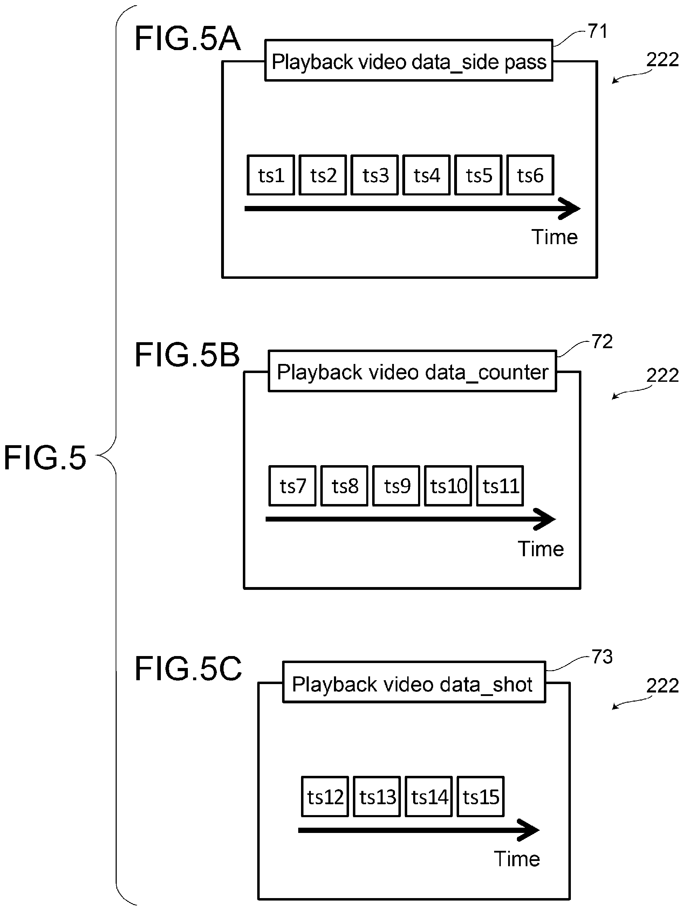

The playback video generation unit 214 of the video playback device 2 generates the playback video data 222 from the divided files downloaded, and then has such data stored in the video playback device storage unit 22. As indicated by playback video data_side pass 71, playback video data_counter 72 and playback video data_shot 73 in FIG.5, the playback video data 222 may be data of an HLS format video as is the case with the video data 322. That is, the playlist 223 lists in a playback order the divided files to be played back, and the playback video data 222 are composed of the divided files listed in the playlist 223. In the examples of FIG.5, the playback video data_side pass 71 are composed of the divided files of ts1 to ts6 that are listed in the playlist side pass 61, the playback video data_counter 72 are composed of the divided files of ts7 to ts11 that are listed in the playlist_couner 62, and the playback video data_shot 73 are composed of the divided files of ts12 to ts15 that are listed in the playlist shot 63.

When the playback video data 222 generated by downloading from the server 3 the divided files of which the download instructions have been accepted are already stored in the video playback device storage unit 22, the playback control unit 215 of the video playback device 2 is capable of playing back the playback video data 222 stored in the video playback device storage unit 22 without downloading the same divided files of the video data 322. The judgment on whether or not to download can be made by checking whether the playback video data 222 composed of the divided files identical to the divided files of which the download instructions have been accepted are already stored in the video playback device storage unit 22; or be made based on a criterion where download will take place if the corresponding scene selection button 55 is pushed for the first time, but not if the button is pushed for the second and subsequent times.

As shown in FIG.2, when the user has pushed the counter button 552 (a download mark 56 is shown in the drawing), the video playback device 2 will download from the server 3, by the above process, only the divided files of ts7 to ts11 that are listed in the playlist_couner 62. Next, in the HLS format which is identical to the format of the video data 322, there will be generated the playback video data_counter 72 composed of the divided files of ts7 to ts11. Since the plurality of the divided files are to be downloaded as they are in terms of format without being coupled together and transcoded, there will be no burden on the sever 3. Further, as compared to a case where all the video data 322 are to be downloaded, not only communication traffic can be restricted, but the volume of the playback video data 222 to be stored in the video playback device storage unit 22 of the video playback device 2 can be reduced as well. Moreover, after the playback video data_counter 72 were generated, when the user has again pushed the counter button 552, the playback video data_counter 72 stored in the video playback device storage unit 22 will be played back, thereby making it possible for the playback video data 222 to be played back even in an off-line state where the network of the video playback device 2 is disconnected.

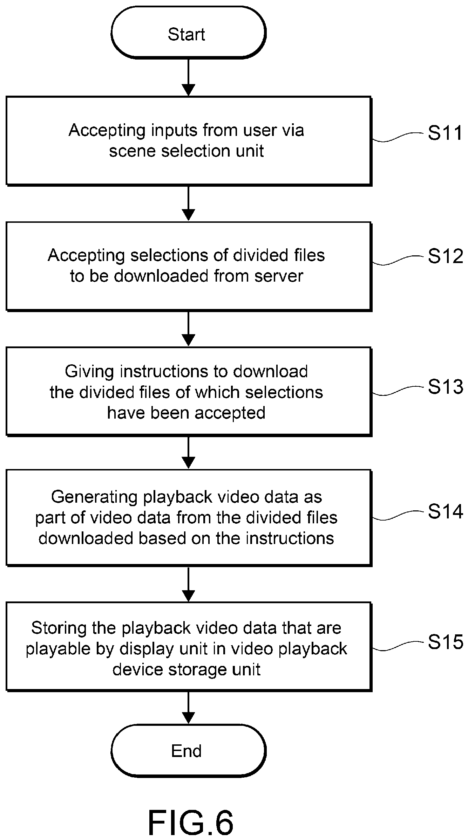

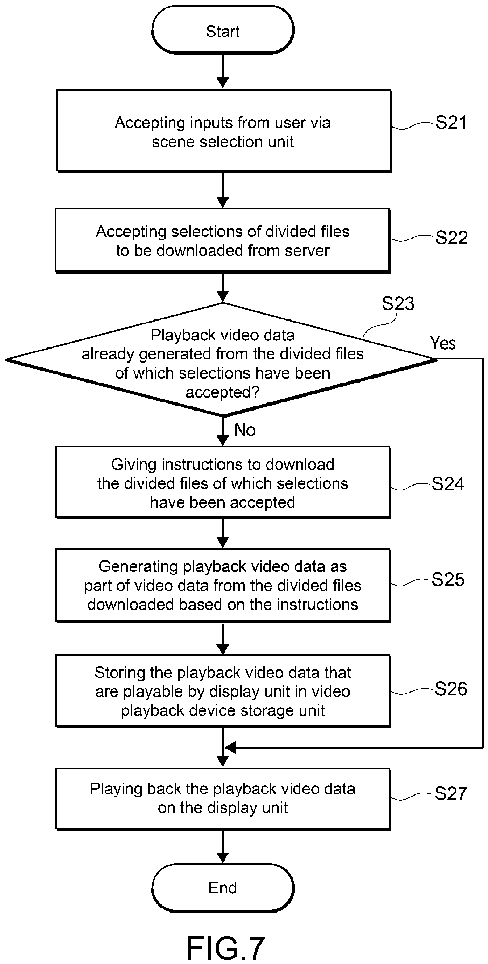

The flow of a video playback method executed by the video playback device 2 of the present embodiment is now described with reference to FIG.6 and FIG.7 which are flowcharts showing a preferable embodiment of the video playback method of the present invention.

As shown in FIG.6, in the beginning, the control unit 21 of the video playback device 2 controls the display unit 25, and accepts the inputs from the user via the multiple scene selection buttons 55 as the scene selection unit 211 (step S11). The scene selection accepting unit 212 accepts the selections of the divided files to be downloaded from the server 3, based on the playlist 223 corresponding to the input accepted (step S12). The download instruction unit 213 gives instructions to download from the server 3 the divided files of which selections have been accepted (step S13). The playback video generation unit 214 generates the playback video data 222 as part of the video data 322 from the divided files downloaded based on the instructions (step S14), and has the video playback device storage unit 223 store the generated playback video data 222 that are playable on the display unit 25 (step S15).

As shown in FIG.7 illustrating an example with additional steps, in the beginning, the control unit 21 of the video playback device 2 controls the display unit 25, and accepts the inputs from the user via the multiple scene selection buttons 55 (step S21). The scene selection accepting unit 212 accepts the selections of the divided files to be downloaded from the server 3, based on the playlist 223 corresponding to the input accepted (step S22). Here, judgment will be made on whether the playback video data 222 have already been generated from the divided files of which selections have been accepted (step S23). If the playback video data 222 have already been generated, the playback video data 222 stored in the video playback device storage unit 22 will be played back on the display unit 25 (step S27).

In contrast, if the playback video data 222 have not yet been generated from the divided files of which selections have been accepted, the download instruction unit 213 will give instructions to download from the server 3 the divided files of which selections have been accepted (step S24). The playback video generation unit 214 generates the playback video data 222 as part of the video data 322 from the divided files downloaded based on the instructions (step S25), and has the video playback device storage unit 223 store the generated playback video data 222 that are playable on the display unit 25 (step S26).

As described above, the video playback device 2 of the present embodiment is a video playback device for selecting part of the video data 322 that are divided into a plurality of divided files and stored in the server storage unit 32, and then having the display unit 25 play back such data. The video playback device 2 includes the scene selection unit 211 for the user to select a certain scene contained in the video data 322; the scene selection accepting unit 212 for accepting the selections of the divided files to be downloaded from the server 3, in accordance with the inputs by the scene selection unit 211; the download instruction unit 213 for giving instructions to download the divided files that have been accepted by the scene selection accepting unit 212 and are to be downloaded; the playback video generation unit 214 for generating the playback video data 222 as part of the video data 322, from the divided files downloaded based on the instructions of the download instruction unit 213; and the video playback device storage unit 22 for storing the playback video data 222 that are playable on the display unit 25.

The video playback method of the present embodiment is a video playback method of selecting part of the video data 322 that are divided into a plurality of divided files and stored in the server storage unit 32, and then having the display unit 25 play back such data. The video playback method includes the input step S11, S21 for accepting the inputs from the user via the scene selection unit 211 that is provided for the user to select a certain scene contained in the video data 322; the scene selection accepting step S12, S22 for accepting the selections of the divided files to be downloaded from the server 3, in accordance with the inputs by the scene selection unit 211; the download instruction step S13, S24 for giving instructions to download the divided files that have been accepted by the scene selection accepting step S12 and are to be downloaded; the playback video generation step S14, S25 for generating the playback video data 222 as part of the video data 322, from the divided files downloaded based on the instructions of the download instruction step S13; and the video playback device storing step S15, S26 for storing the playback video data 222 that are playable on the display unit 25 in the video playback device storage unit 22.

In these cases, since the plurality of the divided files are to be downloaded as they are in terms of format without being coupled together and transcoded, there will be no burden on the sever 3. Further, as compared to a case where all the video data 322 are to be downloaded, not only communication traffic can be restricted, but the volume of the playback video data 222 to be stored in the video playback device storage unit 22 of the video playback device 2 can be reduced as well.

In the video playback device 2 of the present embodiment, the scene selection accepting unit 212 is capable of accepting the selections of the divided files to be downloaded, by means of the first playlist 223 listing, in a playback order, the divided files corresponding to a certain scene; and the playback video generation unit 214 is capable of generating the playback video data 222, by means of the second playlist 223 listing, in a playback order, the divided files to be played back.

In the video playback method of the present embodiment, the scene selection accepting step S12, S22 is capable of accepting the selections of the divided files to be downloaded, by means of the first playlist 223 listing, in a playback order, the divided files corresponding to a certain scene; and the playback video generation step S14 is capable of generating the playback video data 222, by means of the second playlist 223 listing, in a playback order, the divided files to be played back.

In these cases, by selecting and downloading, by means of the playlist 223, the divided files of the HLS format video that are stored on the server 3, and by generating, based on the playlist 223, the playback video data 222 to be played back by the video playback device 2, the playback video data 222 composed of the selected divided files on the server 3 can be played back in the HLS format which is identical to the format of the video data 322.

In the video playback device 2 of the present embodiment, when the divided files that have been accepted by the scene selection accepting unit 212 and are to be downloaded are identical to the divided files contained in the playback video data 222 that have already been generated and stored in the video playback device storage unit 22, the playback video data 222 stored in the video playback device storage unit 22 will be able to be played back on the display unit 25 without downloading from the server 3 the divided files to be downloaded.

In the video playback method of the present embodiment, when the divided files that have been accepted by the scene selection accepting step S22 and are to be downloaded are identical to the divided files contained in the playback video data 222 that have already been generated and stored in the video playback device storage unit 22, the playback video data 22 stored in the video playback device storage unit 22 will be able to be played back on the display unit 25 (step S27) without downloading from the server 3 the divided files to be downloaded.

In these cases, after the playback video data 222 were generated, when the scene selection accepting unit 212 has again accepted the download of an identical divided file(s), the playback video data 222 stored in the video playback device storage unit 22 will be played back, thereby making it possible for the playback video data 222 to be played back even in an off-line state where the network of the video playback device 2 is disconnected.

The present invention has heretofore been described based on the embodiment; the present invention can be exploited in various modified manners. For example, the example of the soccer video mentioned in the above embodiment is merely an example, and the present invention may be utilized for various other purposes. Further, the size and position of the playback screen displayed on the display screen 51, the configuration and position of the operation button group 53, the configuration and position of the scene menu 54, and the types, configurations and positions of the scene selection buttons 55 in FIG.2 are not limited to those shown in FIG.2.

Further, instead of the configuration where the control unit 21 displays the multiple scene selection buttons 55 on the display unit 25, whereby these scene selection buttons 55 and the input unit 23 enabled by the touch panel then constitute the scene selection unit 211 allowing the user to select a certain scene via touch operation, there may be employed a configuration where, for example, a push button-type switch is disposed as the scene selection unit 211 on the video playback device 2, whereby every time the user pushes this switch, the aforementioned scenes of "side pass," "counter" and "shot" will be selected in sequence.

### DESCRIPTION OF THE SYMBOLS

1 Video playback system
2 Video playback device
21 Control unit
211 Scene selection unit
212 Scene selection accepting unit
213 Download instruction unit
214 Playback video generation unit
215 Playback control unit
22 Video playback device storage unit
221 Program
222 Playback video data
223 Playlist (first playlist, second playlist)
23 Input unit
24 Communication unit
25 Display unit
3 Server
32 Server storage unit
322 Video data
4 Communication network
55 Scene selection button

## Claims

1. A video playback device where part of video data that are divided into a plurality of divided files and stored in a server storage unit are selected and then played back on a display unit, comprising:
a scene selection unit for a user to select a certain scene contained in the video data;
a scene selection accepting unit for accepting selections of divided files to be downloaded from a server, in accordance with inputs by the scene selection unit;
a download instruction unit for giving instructions to download the divided files that have been accepted by the scene selection accepting unit and are to be downloaded;
a playback video generation unit for generating playback video data as part of the video data, from the divided files downloaded based on the instructions of the download instruction unit; and
a video playback device storage unit for storing the playback video data that are playable on the display unit.

2. The video playback device according to claim 1, wherein
the scene selection accepting unit accepts the selections of the divided files to be downloaded, by means of a first playlist listing, in a playback order, divided files corresponding to the certain scene; and
the playback video generation unit generates the playback video data by means of a second playlist listing, in a playback order, divided files to be played back.

3. The video playback device according to claim 1 or 2, wherein when the divided files that have been accepted by the scene selection accepting unit and are to be downloaded are identical to divided files contained in the playback video data that have already been generated and stored in the video playback device storage unit, the playback video data stored in the video playback device storage unit are played back on the display unit without downloading from the server the divided files to be downloaded.

4. A video playback method where part of video data that are divided into a plurality of divided files and stored in a server storage unit are selected and then played back on a display unit, comprising:
an input step for accepting inputs from a user via a scene selection unit that is provided for the user to select a certain scene contained in the video data;
a scene selection accepting step for accepting selections of divided files to be downloaded from a server, in accordance with the inputs by the scene selection unit;
a download instruction step for giving instructions to download the divided files that have been accepted by the scene selection accepting step and are to be downloaded;
a playback video generation step for generating playback video data as part of the video data, from the divided files downloaded based on the instructions of the download instruction step; and
a video playback device storing step for storing the playback video data that are playable on the display unit in a video playback device storage unit.

5. The video playback method according to claim 4, wherein
the scene selection accepting step accepts the selections of the divided files to be downloaded, by means of a first playlist listing, in a playback order, divided files corresponding to the certain scene; and
the playback video generation step generates the playback video data by means of a second playlist listing, in a playback order, divided files to be played back.

6. The video playback method according to claim 4 or 5, wherein when the divided files that have been accepted by the scene selection accepting step and are to be downloaded are identical to divided files contained in the playback video data that have already been generated and stored in the video playback device storage unit, the playback video data stored in the video playback device storage unit are played back on the display unit without downloading from the server the divided files to be downloaded.
